# FASCICULE DE BREVET EUROPEEN

(11) **EP 3 559 291 B1**
(45) Date de publication et mention de la délivrance du brevet: **03.02.2021**
(21) Numéro de dépôt: 17822002.6
(22) Date de dépôt: 14.12.2017
(51) Int. Cl.: C22C 1/10, C22C 49/14, C22C 26/00, C01B 32/174

(54) **MATÉRIAU COMPOSITE ALUMINIUM OU CUIVRE-NANOTUBES DE CARBONE ET SON PROCÉDÉ DE PRÉPARATION**
VERBUNDSTOFFMATERIAL MIT ALUMINIUM- ODER KUPFER-KOHLENSTOFFNANORÖHREN UND HERSTELLUNGSVERFAHREN DAFÜR
COMPOSITE MATERIAL CONTAINING ALUMINIUM OR COPPER - CARBON NANOTUBES, AND PRODUCTION METHOD THEREOF

(30) Priorité: 22.12.2016 FR 1663165
(43) Date de publication de la demande: 30.10.2019
(73) Titulaire: Nexans, 92400 Courbevoie (FR)
(72) Inventeur: HIOUANI, Thomas, 62000 Arras (FR); ROYES, Paul, 59320 Emmerin (FR); MASQUELIER, Nicolas, 59133 Phalempin (FR)
(74) Mandataire: Ipsilon
(86) Numéro de dépôt international: PCT/FR2017/053573
(87) Numéro de publication internationale: WO 2018/115645

(56) Documents cités:
- WO-A1-2011/063424
- XIE J ET AL: "Synthesis and characterization of high surface area tin oxide/functionalized carbon nanotubes composite as anode materials", MATERIALS CHEMISTRY AND PHYSICS, ELSEVIER SA, SWITZERLAND, TAIWAN, REPUBLIC OF CHINA, vol. 91, no. 2-3, 15 juin 2005 (2005-06-15), pages 274-280, XP027858452, ISSN: 0254-0584 [extrait le 2005-06-15]

## Description

La présente invention se rapporte à un matériau composite à base d'aluminium ou de cuivre, et de nanotubes de carbone fonctionnalisés par de l'oxyde d'étain, à son procédé de fabrication et à un câble comprenant ledit matériau composite à titre d'élément électriquement conducteur.

Elle s'applique typiquement mais non exclusivement, aux câbles d'énergie à basse tension (notamment inférieure à 6kV) ou à moyenne tension (notamment de 6 à 45-60 kV) ou à haute tension (notamment supérieure à 60 kV, et pouvant aller jusqu'à 800 kV), qu'ils soient en courant continu ou alternatif, dans les domaines du transport d'électricité aérien, sous-marin, terrestre et de l'aéronautique.

Plus particulièrement, l'invention concerne un câble électrique présentant de bonnes propriétés mécaniques, notamment en termes de résistance mécanique à la traction et de bonnes propriétés électriques, notamment en termes de conductivité électrique.

Il est connu de remplacer des conducteurs en cuivre ou en alliage de cuivre par des conducteurs en aluminium ou en alliage d'aluminium. Bien que l'aluminium soit plus léger et plus économique que le cuivre, ce métal présente de faibles propriétés mécaniques, notamment en termes de résistance mécanique à la traction, le rendant difficilement utilisable dans le domaine des câbles.

Afin d'améliorer les propriétés mécaniques d'un conducteur en aluminium ou en alliage d'aluminium, Abbasipour et al. [Trans. Nonferrous Met. Soc. China, 2010, 20, 1561] ont décrit un matériau composite aluminium-nanotubes de carbone. Le matériau composition est obtenu par dépôt de nanotubes de carbone sur des particules d'aluminium et injection à 700°C desdites particules d'aluminium revêtues de nanotubes de carbone dans une matrice en aluminium fondu. 1% en masse de magnésium est ajouté dans l'aluminium fondu afin d'améliorer la mouillabilité des nanotubes de carbone au sein de la matrice en aluminium. Le mélange résultant est ensuite refroidi pour former un matériau composite. Toutefois, le matériau composite obtenu présente une résistance mécanique qui n'est pas optimisée pour une application dans le domaine des câbles tout en étant facilement manipulable. Par ailleurs, le procédé permettant d'obtenir ledit matériau est complexe.

D'autres matériaux composites à base de cuivre et de nanotubes de carbone ont été proposés mais là encore, les propriétés mécaniques et électriques ne sont pas optimisées.

La demande internationale WO2011/063424A1 décrit des fibres revêtues ou imprégnées de nanotubes de carbone, telles que des fibres de carbone revêtues de nanotubes de carbone. Ces fibres peuvent être incorporées dans une matrice polymère, métallique ou céramique.

Ainsi, le but de la présente invention est de fournir un matériau composite à base d'aluminium ou de cuivre présentant une résistance mécanique améliorée tout en garantissant une bonne conductivité électrique, qui puisse être manipulé facilement pour une utilisation dans le domaine des câbles, notamment comme élément électriquement conducteur d'un câble d'énergie et/ou de télécommunications. Un autre but de l'invention est de fournir un procédé simple et économique de préparation d'un tel matériau composite.

L'invention a donc pour premier objet un matériau composite comprenant une matrice métallique en aluminium, en cuivre, en alliage d'aluminium ou en alliage de cuivre, et des nanotubes de carbone fonctionnalisés par de l'oxyde d'étain dispersés dans ladite matrice métallique.

Dans la présente invention, les nanotubes de carbone comprennent aussi bien les nanotubes monoparois ou monofeuillets (en anglais : *Single Wall Carbon Nanotubes, SWNT*) comprenant un seul feuillet de graphène et les nanotubes multiparois ou multifeuillets (en anglais : *Multi Wall Carbon Nanotubes, MWNT*) comprenant plusieurs feuillets de graphène emboîtés les uns dans les autres à la manière des poupées russes, ou bien un seul feuillet de graphène enroulé plusieurs fois sur lui-même.

Dans la présente invention, l'expression « nanotubes de carbone fonctionnalisés par de l'oxyde d'étain » signifie que les nanotubes de carbone présentent en surface de l'oxyde d'étain pouvant se lier au métal de la matrice métallique, et éventuellement à des atomes de carbone d'autres nanotubes de carbone.

En effet, les nanotubes de carbone en tant que tels (i.e. nanotubes de carbones nus ou non fonctionnalisés), même s'ils présentent d'excellentes propriétés électriques, thermiques et mécaniques, se dispersent difficilement dans un métal, et en particulier dans un métal fondu. L'enchevêtrement des nanotubes de carbone en pelotes, associé à une faible réactivité de surface, empêche leur dispersion. Il est donc avantageux d'avoir des nanotubes de carbone dont la surface est modifiée.

L'oxyde d'étain en surface des nanotubes de carbone permet d'une part de servir de site d'accroche pour favoriser les liaisons nanotubes de carbone-métal de la matrice métallique, et d'autre part de protéger les nanotubes de carbone lorsqu'ils sont mélangés avec un métal fondu pour former ledit matériau composite.

Selon une forme de réalisation préférée de l'invention, le matériau composite comprend de 0,1 à 10% en masse environ, de préférence de 0,25 à 5% en masse environ, et de préférence encore de 0,5 à 3% en masse environ de nanotubes de carbone fonctionnalisés par de l'oxyde d'étain, par rapport à la masse totale du matériau composite.

Dans un mode de réalisation particulier de l'invention, les nanotubes de carbone fonctionnalisés par de l'oxyde d'étain présentent un diamètre moyen allant de 5 nm à 50 nm environ.

Le matériau composite présente de préférence une conductivité électrique d'au moins 45% IACS (*International Annealed Copper Standard*) environ, de préférence encore d'au moins 50% IACS, et encore plus préférentiellement d'au moins 55% IACS environ.

Le matériau composite présente de préférence une résistance mécanique à la traction allant de 100 à 1000 Mpa, de préférence encore de 110 à 600 MPa environ, et de préférence encore de 120 à 400 MPa environ.

Le matériau composite comprend de préférence des nanotubes de carbone fonctionnalisés par de l'oxyde d'étain uniformément dispersés dans la matrice métallique en aluminium, en cuivre, en alliage d'aluminium ou en alliage de cuivre.

Dans un mode de réalisation particulier, les nanotubes de carbone fonctionnalisés par de l'oxyde d'étain sont sous la forme de tubes, en particulier ayant un diamètre variant de 50 à 100 nm environ pour une longueur de quelques micromètres.

Selon une forme de réalisation de l'invention, les nanotubes de carbone fonctionnalisés par de l'oxyde d'étain présentent une longueur moyenne allant de 0,5 à 10 µm environ, et de préférence de 1 à 5 µm environ.

La longueur et le diamètre des nanotubes de carbone fonctionnalisés par de l'oxyde d'étain sont mesurés par microscopie électronique à balayage (MEB).

Le matériau composite est de préférence non poreux.

La teneur en aluminium de l'alliage d'aluminium de la matrice métallique peut être d'au moins 95% en masse, et de préférence d'au moins 98% en masse, par rapport à la masse totale de l'alliage d'aluminium.

L'alliage d'aluminium peut être choisi parmi les alliages d'aluminium des séries 1000 (i.e. 99% d'aluminium minimum), 5000 (i.e. comprenant au moins du magnésium), 6000 (i.e. comprenant au moins du magnésium et du silicium) et 8000 (i.e. comprenant moins de 99% d'aluminium).

L'alliage d'aluminium peut comprendre en outre une ou plusieurs impuretés inévitables.

À titre d'exemples d'alliages d'aluminium pouvant être utilisés dans le matériau composite de l'invention, on peut citer les alliages Al1120, Al1370 Al6101, Al6201, Al8030, Al8076 et les alliages thermiques tels que les alliages d'aluminium et de zirconium et les alliages d'aluminium et d'erbium.

La teneur en cuivre de l'alliage de cuivre de la matrice métallique peut être d'au moins 95% en masse, et de préférence d'au moins 99% en masse, par rapport à la masse totale de l'alliage de cuivre.

À titre d'exemples d'alliages de cuivre pouvant être utilisés dans le matériau composite de l'invention, on peut citer les alliages Cu - Sn, Cu - Cr, Cu - Cr - Zr, Cu - Be ou Cu - Fe.

L'alliage de cuivre peut comprendre en outre une ou plusieurs impuretés inévitables.

Les nanotubes de carbone peuvent être fonctionnalisés avec de l'oxyde d'étain *via* des groupements chimiques appropriés, pouvant représenter des sites d'accroche entre les nanotubes de carbone et l'oxyde d'étain.

De tels groupements chimiques peuvent être choisis parmi les groupes SO₃H, COOH, PO₃H₂, OOH, OH, CHO et un de leurs mélanges

Les groupements chimiques préférés sont les groupes COOH.

De préférence, le matériau composite de l'invention est exempt de polymère(s) organique(s). En effet, la présence de polymères organiques peut dégrader ses propriétés électriques, notamment sa conductivité électrique.

Le matériau composite de l'invention est de préférence uniquement constitué des nanotubes de carbone fonctionnalisés par de l'oxyde d'étain (éventuellement *via* des groupements chimiques appropriés) et de la matrice métallique en aluminium, en cuivre, en alliage d'aluminium ou en alliage de cuivre.

L'invention a pour deuxième objet un procédé de préparation d'un matériau composite comprenant une matrice métallique en aluminium, en cuivre, en alliage d'aluminium ou en alliage de cuivre, et des nanotubes de carbone fonctionnalisés par de l'oxyde d'étain dispersés dans ladite matrice métallique, caractérisé en ce qu'il comprend au moins les étapes suivantes :
i) mettre en contact des nanotubes de carbone fonctionnalisés par de l'oxyde d'étain avec un métal choisi parmi l'aluminium, le cuivre, un alliage d'aluminium et un alliage de cuivre, ledit métal étant de préférence à l'état fondu,
ii) mélanger les nanotubes de carbone fonctionnalisés par de l'oxyde d'étain avec le métal, de préférence fondu, pour les disperser de façon homogène dans le métal fondu, et
ii) former une masse solide.

Grâce au procédé de l'invention, un matériau composite comprenant des nanotubes de carbone fonctionnalisés par de l'oxyde d'étain dispersés dans une matrice métallique d'aluminium, de cuivre, d'alliage d'aluminium ou d'alliage de cuivre peut être facilement formé, tout en présentant de bonnes propriétés mécaniques, notamment en termes de résistance mécanique à la traction, et de conductivité électrique, en particulier grâce à la dispersion homogène des nanotubes de carbone fonctionnalisés par de l'oxyde d'étain dans le métal.

L'étape i) peut être effectuée par voie solide ou par voie liquide.

Lorsque l'étape i) est mise en œuvre par voie solide, elle peut consister en la mise en contact des nanotubes de carbone fonctionnalisés par de l'oxyde d'étain sous la forme de poudre avec ledit métal également sous la forme de poudre.

Lorsque l'étape i) est mise en œuvre par voie liquide, elle peut consister en la mise en contact des nanotubes de carbone fonctionnalisés par de l'oxyde d'étain sous la forme de poudre avec ledit métal à l'état fondu.

La voie liquide est préférée.

Lors de l'étape i), l'oxyde d'étain reste à la surface des nanotubes de carbone et ne se diffuse pas dans le métal fondu. Il protège donc les nanotubes de carbone lors du contact avec le métal fondu. En outre, l'étain est un métal lourd (par comparaison à d'autres métaux tels que le cuivre, le nickel ou l'aluminium). La couche d'oxyde d'étain sur les nanotubes de carbone permet ainsi d'éviter leur flottaison dans le métal fondu et de favoriser leur dispersion homogène au sein du métal fondu.

De préférence, le métal fondu est sous la forme d'un bain métallique liquide d'aluminium, de cuivre, d'alliage d'aluminium ou d'alliage de cuivre.

Selon une forme de réalisation particulièrement préférée de l'invention, l'étape i) est effectuée par mise en contact d'au moins un contenant métallique en aluminium, cuivre, alliage d'aluminium ou alliage de cuivre comprenant les nanotubes de carbone fonctionnalisés par de l'oxyde d'étain, avec ledit métal fondu, ledit contenant métallique comprenant au moins une ouverture destinée à recevoir les nanotubes de carbone fonctionnalisés par de l'oxyde d'étain et ladite ouverture étant fermée par un élément de fermeture apte à fondre, à se dissoudre, ou à se détacher du contenant métallique lors de la mise en contact dudit contenant métallique avec le métal fondu.

Ainsi, grâce à cet élément de fermeture, les nanotubes de carbone fonctionnalisés par de l'oxyde d'étain sont confinés dans ledit contenant métallique. Cela permet d'éviter d'une part le contact des nanotubes de carbone fonctionnalisés par de l'oxyde d'étain avec le milieu extérieur, et de ce fait leur oxydation, et d'autre part leur manipulation directe, et ainsi l'utilisation de protections individuelles.

Par ailleurs, cet élément de fermeture est apte à fondre ou à se dissoudre ou à se détacher du contenant métallique lors de la mise en contact dudit contenant métallique avec le métal fondu. Ainsi, l'élément de fermeture peut fondre, se dissoudre, ou se détacher lorsque le contenant métallique est mis en contact ou mélangé avec le métal fondu, permettant ainsi la libération des nanotubes de carbone fonctionnalisés par de l'oxyde d'étain et leur diffusion homogène au sein du métal fondu. De plus, cette aptitude à fondre, à se dissoudre ou à se détacher permet d'éviter une augmentation de pression dans le volume interne et ainsi, d'éviter la formation d'agrégats de nanotubes de carbone fonctionnalisés par de l'oxyde d'étain par densification ou frittage.

Les nanotubes de carbone fonctionnalisés par de l'oxyde d'étain présentent une densité plus faible que le métal du contenant métallique et le métal fondu et sont assez volatils à des températures élevées, par exemple à des températures allant de 550 à 1200°C environ. De ce fait, grâce à la présence de l'élément de fermeture fermant l'ouverture dudit contenant métallique, les nanotubes de carbone fonctionnalisés par de l'oxyde d'étain ne peuvent pas s'échapper facilement dudit contenant métallique lors de sa mise en contact avec le métal fondu. Cela permet d'éviter la flottaison des nanotubes de carbone fonctionnalisés par de l'oxyde d'étain dans le métal fondu, et ainsi d'améliorer encore leur mouillabilité dans le métal fondu.

En particulier, l'étape i) est effectuée par introduction ou injection d'au moins un contenant métallique tel que défini ci-dessus dans un bain métallique liquide, ledit bain étant à une température suffisante pour faire fondre ou se dissoudre ou se détacher l'élément de fermeture dudit contenant, et pour faire fondre ledit contenant métallique.

L'étape i) peut être réalisée autant de fois que nécessaire.

Dans un mode de réalisation particulier, la température suffisante de l'étape i) va de 660 à 1200°C, et de préférence de 700 à 1100°C.

L'étape i) peut être réalisée manuellement ou à l'aide d'un système d'injection qui permet ainsi d'amener plus rapidement ledit contenant métallique au cœur du bain métallique liquide.

Ce système d'injection est bien connu de l'homme du métier, et est adapté pour recevoir le contenant métallique et l'injecter dans le bain métallique liquide. Il peut comprendre au moins un injecteur dans lequel le contenant métallique est inséré, un moyen tel qu'un ressort qui permet de bloquer le contenant métallique dans l'injecteur, et un piston d'injection qui permet d'injecter le contenant métallique dans le bain métallique liquide. L'injecteur a, de préférence, sensiblement la même forme que le contenant métallique.

De préférence, le procédé de l'invention comprend en outre avant l'étape i), une étape de maintien du contenant à une température allant de 50°C à 100°C environ, notamment dans une étuve.

Cette étape de maintien peut être effectuée pendant plusieurs heures, et de préférence en présence d'au moins un gaz inerte, notamment choisi parmi l'argon et l'azote.

Dans l'invention, l'expression « gaz inerte » signifie que le gaz ne réagit avec aucun autre corps.

Cette étape préalable permet d'éliminer l'humidité adsorbée par les nanotubes de carbone fonctionnalisés par de l'oxyde d'étain, et d'éviter leur oxydation lors de l'étape i).

Dans un mode de réalisation particulier, le procédé, et notamment l'étape i), sont effectués en présence d'au moins un gaz inerte, de préférence choisi parmi l'argon et l'azote. Cela permet d'éviter l'oxydation des nanotubes de carbone et/ou du bain métallique liquide.

Ainsi, grâce à l'étape i), les nanotubes de carbone fonctionnalisés par de l'oxyde d'étain sont plongés directement au cœur du bain métallique liquide, et leur oxydation et leur flottaison en surface du bain métallique liquide sont évitées.

Dans un mode de réalisation particulier, le contenant métallique est de forme allongée. Cela permet d'améliorer la diffusion des nanotubes de carbone fonctionnalisés par de l'oxyde d'étain dans le métal fondu.

Plus particulièrement, le contenant peut comprendre deux extrémités longitudinales opposées, ladite ouverture étant aménagée au niveau d'une desdites deux extrémités.

Le contenant métallique peut être un tube de diamètre allant de 5 à 100 mm environ, et de préférence de 5 à 15 mm environ ; et de longueur allant de 5 à 50 cm environ, et de préférence de 5 à 40 cm environ.

Le contenant métallique peut avoir une masse totale allant de 0,5g à 6kg environ, et de préférence de 0,5g à 100g environ respectivement pour un volume de métal fondu allant de 300ml à 2000l environ, et de préférence de 300ml à 2l environ. La masse totale désigne la somme de la masse du contenant vide (i.e. sans nanotubes de carbone fonctionnalisés par de l'oxyde d'étain) et de la masse des nanotubes de carbone fonctionnalisés par de l'oxyde d'étain.

Le contenant métallique peut comprendre de 1g à 70g de nanotubes de carbone fonctionnalisés par de l'oxyde d'étain.

L'élément de fermeture peut avoir une température de fusion ou de dissolution inférieure ou égale à la température du métal fondu.

La température du métal fondu peut aller de 550 à 1300°C environ, et de préférence de 700 à 1200°C environ.

Lorsque l'élément de fermeture est apte à se détacher du contenant, il remonte de préférence à la surface du métal fondu.

Le poids (i.e. force de pesanteur) de l'élément de fermeture peut être alors inférieur au poids (i.e. poussée d'Archimède) du métal fondu.

Dans un mode de réalisation particulier, le contenant métallique comprend au moins un gaz inerte.

Les gaz inertes ayant une densité par rapport à l'air supérieure ou égale à 0,9 environ, et de préférence supérieure ou égale à 0,95 environ sont préférés. La présence d'un tel gaz inerte dans le contenant métallique permet d'éviter l'oxydation des nanotubes de carbone fonctionnalisés par de l'oxyde d'étain, notamment à des températures élevées (e.g. telles que la température du métal fondu).

Dans un mode de réalisation préféré, le gaz inerte est choisi parmi l'argon et l'azote.

Le contenant métallique contient de préférence uniquement les nanotubes de carbone fonctionnalisés par de l'oxyde d'étain, et éventuellement le gaz inerte.

L'élément de fermeture est de préférence non métallique. L'élément de fermeture non métallique est alors apte à fondre ou à se dissoudre ou à se détacher du contenant avant que le métal du contenant métallique ne fonde ou ne soit complètement fondu. De ce fait, la dispersion des nanotubes de carbone fonctionnalisés par de l'oxyde d'étain au sein du métal fondu est facilitée.

Dans un mode de réalisation particulièrement préféré de l'invention, l'élément de fermeture est perméable aux gaz susceptibles d'être présents dans le contenant métallique, et imperméable aux particules solides, de préférence aux particules solides de taille nanométrique.

Ces gaz susceptibles d'être présents dans le contenant métallique peuvent être les gaz inertes tels que ceux définis ci-dessus ou l'air.

En effet, grâce à cette propriété, l'explosion du contenant métallique dans le métal fondu est évitée, et de ce fait l'éjection rapide des nanotubes de carbone fonctionnalisés par de l'oxyde d'étain également : le métal fondu étant à une température élevée, la mise en contact du contenant métallique avec ledit métal fondu pourrait conduire à une augmentation brusque de la pression dans le contenant métallique. Grâce à l'élément de fermeture perméable, les gaz susceptibles d'être présents dans le contenant métallique peuvent être libérés dans le métal fondu lors de la mise en contact du contenant métallique avec ledit métal fondu, permettant ainsi d'éviter une augmentation de pression dans le contenant métallique, et ainsi l'éjection brusque du contenant métallique des nanotubes de carbone fonctionnalisés par de l'oxyde d'étain. Les nanotubes de carbone fonctionnalisés par de l'oxyde d'étain sont alors libérés dans le métal fondu une fois que l'élément de fermeture a fondu ou s'est dissous dans le métal fondu ou s'est détaché du contenant métallique, et éventuellement une fois que le contenant métallique a fondu dans le métal fondu.

L'élément de fermeture peut être en matière cellulosique (i.e. à base de cellulose).

Dans un mode de réalisation particulier, l'élément de fermeture est un ou plusieurs filtres, et de préférence un ou plusieurs filtres nanométriques, et de manière encore plus préférée un ou plusieurs filtres nanométriques en papier.

De préférence, l'élément de fermeture n'est pas fixé de manière permanente au contenant métallique et/ou ne fait partie intégrante du contenant métallique. Ainsi, il peut se détacher, fondre ou se dissoudre plus facilement, indépendamment de la dissolution du contenant métallique dans le métal fondu.

De préférence, l'élément de fermeture ferme le contenant métallique au moyen d'un fil métallique qui est apte à fondre, à se dissoudre, ou à se détacher lors de la mise en contact du contenant métallique avec le métal fondu.

Dans un mode de réalisation particulier, le métal du fil métallique est choisi parmi le cuivre, l'aluminium, un alliage de cuivre et un alliage d'aluminium.

Dans un mode de réalisation particulier, le métal du contenant métallique est choisi parmi le cuivre, l'aluminium, un alliage de cuivre et un alliage d'aluminium.

Le métal du contenant métallique peut être identique ou différent du métal fondu. De préférence, le métal du contenant métallique est identique au métal fondu.

Le métal du fil métallique peut être identique ou différent du métal du contenant métallique. De préférence, le métal du fil métallique est identique au métal du contenant métallique.

L'étape ii) peut être effectuée par des techniques bien connues de l'homme du métier telles que le brassage mécanique, le brassage magnétique ou l'utilisation d'un courant électromagnétique.

Lorsqu'un contenant métallique est utilisé, l'étape ii) permet de faire fondre complètement ledit contenant métallique.

Lorsque l'étape i) est mise en œuvre par voie solide, l'étape iii) peut être une étape de compactage des poudres.

Lorsque l'étape i) est mise en œuvre par voie liquide, l'étape iii) peut être effectuée par coulée du mélange de l'étape ii) précédente pour former ledit matériau composite.

Ledit matériau composite obtenu à l'issu du procédé présente des propriétés mécaniques et électriques améliorées.

Dans un mode de réalisation particulier, l'étape iii) est réalisée à une température allant de 660°C à 1200°C environ, et de préférence de 700°C à 1100°C environ. Cette étape iii) peut comprendre une étape de refroidissement (i.e. solidification), notamment à une vitesse contrôlée.

Le procédé peut comprendre en outre une étape i₀) de préparation des nanotubes de carbone fonctionnalisés par de l'oxyde d'étain.

Cette étape présente l'avantage de ne pas dégrader les propriétés initiales des nanotubes de carbone nus (i.e. non fonctionnalisés). En effet, l'étain a un point de fusion peu élevé (231,9°C). Il ne nécessite donc pas de hautes températures pour être déposé uniformément sur les nanotubes de carbone (comme c'est le cas par exemple du nickel, du cuivre ou de l'aluminium).

De préférence, l'étape i₀) comprend les sous-étapes suivantes :
- éventuellement une sous-étape i₀₁) de fonctionnalisation de nanotubes de carbone par des groupements chimiques appropriés, pouvant représenter des sites d'accroche entre les nanotubes de carbone et l'oxyde d'étain,
- une sous-étape i₀₂) de mise en contact de nanotubes de carbone fonctionnalisés commerciaux ou tels que préparés à la sous-étape précédente si elle existe, avec un précurseur d'étain, et
- une sous-étape i₀₃) de chauffage.

Les groupements chimiques peuvent être choisis parmi les groupes SO₃H, COOH, PO₃H₂, OOH, OH, CHO et un de leurs mélanges.

Les groupements chimiques préférés sont les groupes COOH.

À titre d'exemples, on peut citer les nanotubes de carbone multifeuillets fonctionnalisés par des groupements carboxyle, tels que ceux commercialisés sous la dénomination commerciale MWNT-COOH® par Alpha Nano Tech Inc. ou par Nanocyl.

Différentes méthodes bien connues de l'homme du métier existent pour effectuer la sous-étape i₀₁) et ainsi modifier préalablement la surface des nanotubes de carbone.

On peut par exemple citer l'oxydation électrochimique au potentiel de décomposition de l'eau, le traitement acide (e.g. acide sulfurique, acide nitrique, acide citrique, acide orthophosphorique, acide oxalique ou un de leurs mélanges), l'emploi de KMnO₄, l'oxydation en phase gazeuse, le par traitement plasma, l'oxydation électrochimique d'amines primaires et secondaires, d'alcools, de carboxylates, d'hydrazides ou la réduction de sels de diazonium.

La sous-étape i₀₁) est de préférence effectuée par traitement acide des nanotubes de carbone, notamment avec de l'acide sulfurique.

En particulier, les nanotubes de carbone non fonctionnalisés (i.e. nus) peuvent être introduit dans un milieu liquide comprenant de l'acide citrique et de l'eau, et dispersés à l'aide d'ultrasons. Puis un agent oxydant tel de l'acide sulfurique est ajouté à la dispersion résultante qui est ensuite portée à reflux, puis refroidie. Les nanotubes de carbone fonctionnalisés sont ensuite filtrés puis lavés à l'eau jusqu'à l'obtention d'un pH neutre. On obtient ainsi des nanotubes de carbone fonctionnalisés présentant en surface des groupements chimiques oxygénés de type groupements dicétones, éthers, acides carboxyliques, esters, hydroxyles, énols, etc...

Le précurseur d'étain peut être choisi parmi le sulfate d'étain et le chlorure d'étain.

La sous-étape i₀₂) peut être effectuée en présence d'un dispersant, notamment choisi parmi le dodécylsulfate de sodium (SDS) et le bromure de cétyltriméthylammonium (CTAB).

La sous-étape i₀₂) peut être effectuée sous agitation magnétique et/ou en présence d'ultrasons séquencés.

La sous-étape i₀₂) peut être effectuée en introduisant les nanotubes de carbone de l'étape i₀₁) ou des nanotubes de carbone commerciaux dans de l'eau, en ajoutant le dispersant puis le précurseur d'étain, et en soumettant le mélange résultant à des ultrasons séquencés.

La sous-étape i₀₃) de chauffage peut être effectuée à une température allant de 80 à 350°C environ.

Elle peut comprendre une sous-étape de séchage du mélange de la sous-étape i₀₂) afin de former une pâte (e.g. évaporation des solvants), puis une sous-étape de traitement thermique, notamment dans un creuset en céramique fermé.

La sous-étape de séchage peut être effectuée à une température allant de 80 à 200°C environ.

La sous-étape de traitement thermique peut être effectuée à une température supérieure à la température de fusion de l'étain (i.e. 231,9°C), et en particulier allant de 250 à 350°C environ.

Le procédé conforme à l'invention peut comprendre en outre après l'étape iii), au moins une étape iv) de mise en forme bien connue de l'homme du métier telle qu'une étape de laminage, de travail à froid (e.g. étape de tréfilage), ou d'extrusion, afin d'obtenir un élément électriquement conducteur allongé composite avec la forme et les dimensions désirées.

La présente invention a pour troisième objet un matériau composite obtenu selon le procédé conforme au deuxième objet de l'invention.

Le matériau composite obtenu selon le procédé conforme au deuxième objet de l'invention peut être un matériau composite tel que défini dans le premier objet de l'invention.

La présente invention a également pour quatrième objet un câble électrique comprenant au moins un matériau composite conforme au premier objet de l'invention ou obtenu selon le procédé conforme au deuxième objet de l'invention.

Ledit câble présente des propriétés mécaniques et électriques améliorées.

Ainsi, le matériau composite est utilisé comme un élément électriquement conducteur allongé dans ledit câble.

Dans un mode de réalisation particulier, le matériau composite peut être sous la forme d'un brin composite de section transversale ronde, trapézoïdale ou en forme de Z.

Dans un mode de réalisation, le câble comprend plusieurs brins composites, et de préférence un assemblage de brins composites.

Cet assemblage peut notamment former au moins une couche du type enveloppe continue, par exemple de section transversale circulaire ou ovale ou encore carrée.

Selon une forme de réalisation particulièrement préférée de l'invention, le câble peut être un câble OHL.

Par conséquent, il peut comprendre un élément allongé de renforcement, de préférence central, ledit assemblage pouvant être positionné autour de l'élément allongé de renforcement.

Lorsque les brins composites sont de section transversale ronde, ils peuvent avoir un diamètre pouvant aller de 2,25 mm à 4,75 mm. Lorsque les brins sont de section transversale non ronde, leur diamètre équivalent en section ronde peut également aller de 2,25 mm à 4,75 mm.

Bien entendu, il est préférable que tous les brins constitutifs d'un assemblage aient la même forme et les mêmes dimensions.

Dans un mode de réalisation préféré de l'invention, l'élément allongé de renforcement est entouré par au moins une couche d'un assemblage de brins composites.

De préférence, les brins composites constitutifs d'au moins une couche d'un assemblage de brins composites, sont aptes à conférer à ladite couche une surface sensiblement régulière, chaque brin constitutif de la couche pouvant notamment présenter une section transversale de forme complémentaire au(x) brin(s) qui lui est/sont adjacent(s).

Selon l'invention, par « brins composites apte à conférer à ladite couche une surface sensiblement régulière, chaque brin constitutif de la couche pouvant notamment présenter une section transversale de forme complémentaire au(x) brin(s) qui lui est/sont adjacent(s)», on entend que : la juxtaposition ou l'emboîtement de l'ensemble des brins constitutifs de la couche, forme une enveloppe continue (sans irrégularités), par exemple de section circulaire ou ovale ou encore carrée.

Ainsi, les brins de section transversale en forme de Z ou en forme de trapèze permettent d'obtenir une enveloppe régulière contrairement aux brins de section transversale ronde. En particulier, des brins de section transversale en forme de Z sont préférés.

De manière encore plus préférée, ladite couche formée par l'assemblage des brins composites présente une section transversale en forme d'anneau.

L'élément allongé de renforcement peut être typiquement un élément composite ou métallique. A titre d'exemple, on peut citer des brins d'acier ou des brins composites d'aluminium dans une matrice organique.

Les brins composites peuvent être torsadés autour de l'élément allongé de renforcement, notamment lorsque le câble comprend un assemblage de brins composites.

Dans un mode de réalisation particulier, le câble électrique de l'invention comprend au moins une couche électriquement isolante entourant ledit matériau composite ou la pluralité de matériaux composites, ladite couche électriquement isolante comprenant au moins un matériau polymère.

Le matériau polymère de la couche électriquement isolante du câble de l'invention peut être choisi parmi les polymères réticulés et non réticulés, les polymères du type inorganique et du type organique.

Le matériau polymère de la couche électriquement isolante peut être un homo- ou un co-polymère ayant des propriétés thermoplastiques et/ou élastomères.

Les polymères du type inorganique peuvent être des polyorganosiloxanes.

Les polymères du type organique peuvent être des polyoléfines, des polyuréthanes, des polyamides, des polyesters, des polyvinyliques ou des polymères halogénés tels que des polymères fluorés (e.g. polytétrafluoroéthylène PTFE) ou des polymères chlorés (e.g. polychlorure de vinyle PVC).

Les polyoléfines peuvent être choisies parmi les polymères d'éthylène et de propylène. A titre d'exemple de polymères d'éthylène, on peut citer les polyéthylènes linéaires basse densité (LLDPE), les polyéthylènes basse densité (LDPE), les polyéthylènes moyenne densité (MDPE), les polyéthylènes haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les copolymères d'éthylène/éthyle acrylate (EEA), ou les terpolymères d'éthylène et de propylène (EPT) tels que par exemple les terpolymères d'éthylène propylène diène monomère (EPDM).

Plus particulièrement, le câble électrique conforme à l'invention peut être un câble électrique de type câble d'énergie.

Par exemple, le câble de l'invention peut comprendre un matériau composite conforme au premier objet de l'invention ou obtenu selon le procédé conforme au deuxième objet de l'invention, une première couche semi-conductrice entourant ledit matériau composite, une couche électriquement isolante entourant la première couche semi-conductrice et une deuxième couche semi-conductrice entourant la couche électriquement isolante.

La couche électriquement isolante est telle que définie précédemment.

Dans un mode de réalisation particulier, généralement conforme au câble électrique de type câble d'énergie de l'invention, la première couche semi-conductrice, la couche électriquement isolante et la deuxième couche semi-conductrice constituent une isolation tricouche. En d'autres termes, la couche électriquement isolante est directement en contact physique avec la première couche semi-conductrice, et la deuxième couche semi-conductrice est directement en contact physique avec la couche électriquement isolante.

Le câble électrique de l'invention peut comprendre en outre un écran métallique entourant la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs posé(s) en hélice autour de la deuxième couche semi-conductrice, ou d'un écran dit « étanche » de type tube métallique entourant la deuxième couche semi-conductrice. Ce dernier type d'écran permet notamment de faire barrière à l'humidité ayant tendance à pénétrer le câble électrique en direction radiale.

Tous les types d'écrans métalliques peuvent jouer le rôle de mise à la terre du câble électrique et peuvent ainsi transporter des courants de défaut, par exemple en cas de court-circuit dans le réseau concerné.

En outre, le câble de l'invention peut comprendre une gaine extérieure de protection entourant la deuxième couche semi-conductrice, ou bien entourant plus particulièrement ledit écran métallique lorsqu'il existe. Cette gaine extérieure de protection peut être réalisée classiquement à partir de matériaux thermoplastiques appropriés tels que des HDPE, des MDPE ou des LLDPE ; ou encore des matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant* »).

D'autres couches, telles que des couches gonflantes en présence d'humidité peuvent être ajoutées entre la deuxième couche semi-conductrice et l'écran métallique lorsqu'il existe et/ou entre l'écran métallique et la gaine extérieure lorsqu'ils existent, ces couches permettant d'assurer l'étanchéité longitudinale du câble électrique à l'eau.

D'autres caractéristiques et avantages de la présente invention apparaîtront à la lumière des exemples qui vont suivre en référence aux figures annotées, lesdits exemples et figures étant donnés à titre illustratif et nullement limitatif.

La figure 1 représente de manière schématique une structure, en coupe transversale, d'une première variante d'un câble électrique selon l'invention.

La figure 2 représente de manière schématique une structure, en coupe transversale, d'une seconde variante d'un câble électrique selon l'invention.

La figure 3 représente des nanotubes de carbone fonctionnalisés par de l'oxyde d'étain.

Pour des raisons de clarté, seuls les éléments essentiels pour la compréhension de l'invention ont été représentés de manière schématique, et ceci sans respect de l'échelle.

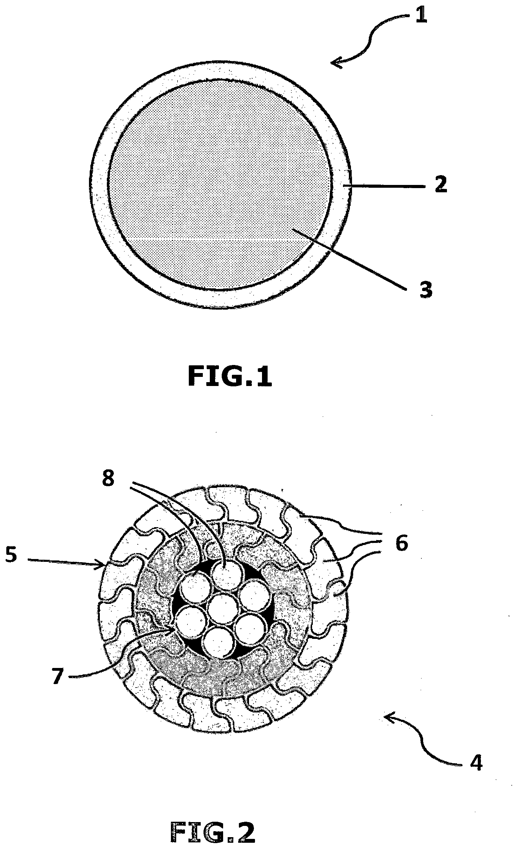

La figure 1 représente une première variante d'un câble électrique 1 selon l'invention, vue en coupe transversale, comprenant un matériau composite 2 conforme au premier objet de l'invention ou obtenu selon le procédé conforme au deuxième objet de l'invention et une couche électriquement isolante 3 entourant ledit matériau composite 2.

La figure 2 représente une seconde variante d'un câble électrique 4 de transmission électrique à haute tension du type OHL selon l'invention, vue en coupe transversale, comprenant trois couches d'un assemblage 5 de brins composites 6, chaque brin composite étant constitué d'un matériau composite selon l'invention. Ces trois couches 5 entourent un élément central allongé de renforcement 7. Les brins composites 6 constitutifs desdites couches 5 ont une section transversale en forme de Z (ou en de forme « S » selon l'orientation du Z). L'élément central allongé de renforcement 7 représenté dans la figure 2 peut être par exemple des brins d'acier 8 ou des brins composites d'aluminium dans une matrice organique.

Dans le mode de réalisation représenté sur la figure 2, il est possible de modifier le nombre de brins composites 6 de chaque couche 5, leur forme, le nombre de couches 5 ou encore le nombre de brins d'acier ou brins composites 8.

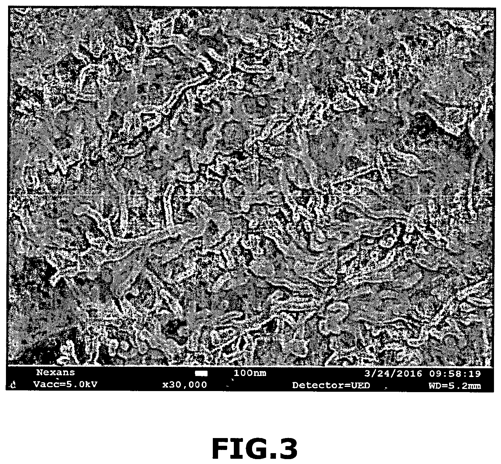

La figure 3 montre des nanotubes de carbone fonctionnalisés par de l'oxyde d'étain obtenus selon le procédé conforme à l'invention.

### Préparation de matériaux composites conformes à l'invention et obtenus selon le procédé conforme à l'invention

### 1.1 Préparation de nanotubes de carbone fonctionnalisés par de l'oxyde d'étain

Un milieu liquide comprenant de l'eau et de l'acide citrique. Des nanotubes de carbone non fonctionnalisés (i.e. nus) commercialisés sous la référence Nanocyl NC 7000 ont alors été introduits dans le milieu liquide, puis dispersés à l'aide d'ultrasons. La dispersion résultante a été transvasée dans un ballon contenant de l'acide sulfurique puis la dispersion résultante a été portée à reflux pendant au moins 1h sous agitation, puis refroidie. Les nanotubes de carbone fonctionnalisés ont ensuite été filtrés puis lavés à l'eau jusqu'à l'obtention d'un pH neutre.

Les nanotubes de carbone fonctionnalisés par des groupements acides ont été introduits dans un bécher d'eau distillée sous agitation magnétique, puis un dispersant de type bromure de cétyltriméthyl ammonium (CTAB) ou dodécylsulfate de sodium (SDS) a été ajouté toujours sous agitation magnétique forte puis à l'aide d'ultrasons. Ensuite, du sulfate d'étain a été ajouté sous agitation magnétique puis à l'aide d'ultrasons séquencés. Le mélange résultant a été séché entre 80 et 150°C jusqu'à évaporation des solvants et formation d'une pâte assez compacte. Puis la pâte a été traitée thermiquement dans une étuve à 150°C pendant au moins 2h, puis à 280°C pendant au moins 3h (étape i₀).

### 1.2 Préparation du matériau composite de l'invention

L'étape i) a été effectuée à l'aide de 6 contenants métalliques tels que définis dans l'invention. Les contenants métalliques étaient sous la forme de tubes en alliage d'aluminium (Al 1350®) de 9,5 mm de diamètre et de 5 à 10 cm de longueur. Chacun des tubes a été rempli avec 2 g de nanotubes de carbone fonctionnalisés avec de l'oxyde d'étain tels que préparés à l'exemple 1.1. L'élément de fermeture était constitué de deux filtres nanométriques en papier. L'élément de fermeture ferme l'ouverture dudit tube grâce à un fil métallique en aluminium (Al 1350®).

Les contenants métalliques comprenant les nanotubes de carbone fonctionnalisés avec de l'oxyde d'étain ont été injectés dans 1,2 kg d'un bain d'un alliage d'aluminium (Al 1350®) au moyen d'un injecteur sous atmosphère d'azote.

Les contenants ont été mélangés au bain d'alliage d'aluminium liquide à l'aide d'un mélangeur à pales rotatives (brassage mécanique et électromagnétique) (étape ii)). Puis, le mélange résultant a été coulé dans un moule métallique préformé afin de former un matériau composite conforme à l'invention sous la forme d'une masse solide (étape iii)).

Le matériau composite obtenu a été laminé pour passer d'un diamètre de 30 mm environ à un diamètre de 10 mm environ, puis tréfilé jusqu'au diamètre final souhaité.

Le tableau 1 ci-dessous illustre les résultats de conductivité électrique (en % IACS) et de résistance mécanique à la traction (en MPa) des matériaux composites **M₁** et **M₂** de l'invention ayant respectivement des diamètres finaux de 9,55 mm et 3,3 mm, et à titre comparatif d'alliages d'aluminium ne comprenant pas de nanotubes de carbone fonctionnalisés par de l'oxyde d'étain (i.e. non conformes à l'invention) **M'₁ et M'₂** ayant respectivement des diamètres de 9,55 mm et 3,3 mm.

**TABLEAU 1**

| | **Conductivité % IACS** | **Résistance mécanique à la traction (en MPa)** |
|---|---|---|
| **M₁** | 53,1 | 137,2 |
| **M'₁** | 62,5 | 116,4 |
| **M₂** | 53,5 | 193,1 |
| **M'₂** | 62,5 | 162,6 |

La présence des nanotubes de carbone fonctionnalisés par de l'oxyde d'étain permet d'améliorer la résistance mécanique du matériau composite tout en garantissant une conductivité électrique acceptable.

**M₁** et **M₂** comprenaient 1% en masse environ de nanotubes de carbone fonctionnalisés par de l'oxyde d'étain.

## Revendications

1. Matériau composite comprenant une matrice métallique en aluminium, en cuivre, en alliage d'aluminium ou en alliage de cuivre, et des nanotubes de carbone fonctionnalisés par de l'oxyde d'étain dispersés dans ladite matrice métallique.

2. Matériau composite selon la revendication 1, **caractérisé en ce qu'**il comprend de 0,1 à 10 % en masse de nanotubes de carbone fonctionnalisés par de l'oxyde d'étain, par rapport à la masse totale du matériau composite.

3. Matériau composite selon l'une quelconque des revendications précédentes, **caractérisé en ce qu'**il présente une conductivité électrique d'au moins 50% IACS.

4. Matériau composite selon l'une quelconque des revendications précédentes, **caractérisé en ce qu'**il présente une résistance mécanique à la traction allant de 100 à 1000 MPa.

5. Procédé de préparation d'un matériau composite comprenant une matrice métallique en aluminium, en cuivre, en alliage d'aluminium ou en alliage de cuivre, et des nanotubes de carbone fonctionnalisés par de l'oxyde d'étain dispersés dans ladite matrice métallique, **caractérisé en ce qu'**il comprend au moins les étapes suivantes :
i) mettre en contact des nanotubes de carbone fonctionnalisés par de l'oxyde d'étain avec un métal choisi parmi l'aluminium, le cuivre, un alliage d'aluminium et un alliage de cuivre,
ii) mélanger les nanotubes de carbone fonctionnalisés par de l'oxyde d'étain avec le métal pour les disperser de façon homogène dans le métal fondu, et
ii) former une masse solide.

6. Procédé selon la revendication 5, **caractérisé en ce que** ledit métal est à l'état fondu.

7. Procédé selon la revendication 6, **caractérisé en ce que** l'étape i) est effectuée par mise en contact d'au moins un contenant métallique en aluminium, cuivre, alliage d'aluminium ou alliage de cuivre comprenant des nanotubes de carbone fonctionnalisés par de l'oxyde d'étain avec ledit métal fondu, ledit contenant métallique comprenant au moins une ouverture destinée à recevoir les nanotubes de carbone fonctionnalisés par de l'oxyde d'étain et ladite ouverture étant fermée par un élément de fermeture apte à fondre, à se dissoudre, ou à se détacher du contenant métallique lors de la mise en contact dudit contenant métallique avec le métal fondu.

8. Procédé selon la revendication 7, **caractérisé en ce que** l'étape i) est effectuée par introduction ou injection d'au moins un contenant métallique tel que défini dans la revendication 7 dans un bain métallique liquide, ledit bain étant à une température suffisante pour faire fondre ou se dissoudre ou se détacher l'élément de fermeture dudit contenant, et pour faire fondre ledit contenant métallique.

9. Procédé selon la revendication 8, **caractérisé en ce que** la température suffisante de l'étape i) va de 550 à 1200°C.

10. Procédé selon l'une quelconque des revendications 7 à 9, **caractérisé en ce que** l'élément de fermeture est un ou plusieurs filtres nanométriques en papier.

11. Procédé selon l'une quelconque des revendications 6 à 10, **caractérisé en ce que** l'étape iii) est effectuée par coulée du mélange de l'étape précédente ii) pour former ledit matériau composite.

12. Procédé selon l'une quelconque des revendications 5 à 11, **caractérisé en ce qu'**il comprend en outre une étape i₀) de préparation des nanotubes de carbone fonctionnalisés par de l'oxyde d'étain comprenant les sous-étapes suivantes :
- éventuellement une sous-étape i₀₁) de fonctionnalisation de nanotubes de carbone par des groupements chimiques appropriés, pouvant représenter des sites d'accroche entre les nanotubes de carbone et l'oxyde d'étain,
- une sous-étape i₀₂) de mise en contact des nanotubes de carbone fonctionnalisés commerciaux ou tels que préparés à la sous-étape précédente si elle existe, avec un précurseur d'étain, et
- une sous-étape i₀₃) de chauffage.

13. Procédé selon la revendication 12, **caractérisé en ce que** la sous-étape i₀₁) est effectuée par traitement acide des nanotubes de carbone avec de l'acide sulfurique.

14. Procédé selon la revendication 12 ou 13, **caractérisé en ce que** le précurseur d'étain est le sulfate d'étain.

15. Câble électrique, **caractérisé en ce qu'**il comprend au moins un matériau composite tel que défini à l'une quelconque des revendications 1 à 4 ou obtenu selon le procédé tel que défini à l'une quelconque des revendications 5 à 14.

16. Câble selon la revendication 15, **caractérisé en ce qu'**il est un câble OHL comprenant un élément allongé de renforcement et un assemblage de brins composites positionnés autour de l'élément allongé de renforcement, chacune des brins composites étant un matériau composite tel que défini à l'une quelconque des revendications 1 à 4 ou obtenu selon le procédé tel que défini à l'une quelconque des revendications 5 à 14.

17. Câble selon la revendication 15 ou 16, **caractérisé en ce qu'**il comprend au moins une couche électriquement isolante entourant ledit matériau composite ou la pluralité de matériaux composites, ladite couche électriquement isolante comprenant au moins un matériau polymère.

## Patentansprüche

1. Verbundstoffmaterial, umfassend eine metallische Aluminium-, Kupfer-, Aluminiumlegierungs- oder Kupferlegierungsmatrix und durch Zinnoxid funktionalisierte, in der metallischen Matrix dispergierte Kohlenstoffnanoröhrchen.

2. Verbundstoffmaterial nach Anspruch 1, **dadurch gekennzeichnet, dass** es 0,1 bis 10 Ma% durch Zinnoxid funktionalisierte Kohlenstoffnanoröhrchen in Bezug auf die Gesamtmasse des Verbundstoffmaterials umfasst.

3. Verbundstoffmaterial nach einem der vorangehenden Ansprüche, **dadurch gekennzeichnet, dass** es eine elektrische Leitfähigkeit von mindestens 50 % IACS aufweist.

4. Verbundstoffmaterial nach einem der vorangehenden Ansprüche, **dadurch gekennzeichnet, dass** es eine mechanische Widerstandsfähigkeit gegenüber Zug von 100 bis 1000 MPa aufweist.

5. Verfahren zur Herstellung eines Verbundstoffmaterials, umfassend eine metallische Aluminium-, Kupfer-, Aluminiumlegierungs- oder Kupferlegierungsmatrix und durch Zinnoxid funktionalisierte, in der metallischen Matrix dispergierte Kohlenstoffnanoröhrchen, **dadurch gekennzeichnet, dass** es mindestens die folgenden Schritte umfasst:
i) Inkontaktversetzen der durch Zinnoxid funktionalisierten Kohlenstoffnanoröhrchen mit einem Metall, ausgewählt aus Aluminium, Kupfer, einer Aluminiumlegierung und einer Kupferlegierung,
ii) Mischen der durch Zinnoxid funktionalisierten Kohlenstoffnanoröhrchen mit dem Metall, um sie gleichmäßig in dem geschmolzenen Metall zu dispergieren, und
ii) Bilden einer soliden Masse.

6. Verfahren nach Anspruch 5, **dadurch gekennzeichnet, dass** das Metall in geschmolzenem Zustand ist.

7. Verfahren nach Anspruch 6, **dadurch gekennzeichnet, dass** der Schritt i) durch Inkontaktversetzen von mindestens einem Metallbehälter aus Aluminium, Kupfer, Aluminiumlegierung oder Kupferlegierung, umfassend durch Zinnoxid funktionalisierte Kohlenstoffnanoröhrchen, mit dem geschmolzenen Metall durchgeführt wird, wobei der Metallbehälter mindestens eine Öffnung umfasst, die zur Aufnahme der durch Zinnoxid funktionalisierten Kohlenstoffnanoröhrchen bestimmt ist und die Öffnung durch ein Verschlusselement verschlossen ist, das imstande ist, zu schmelzen, sich aufzulösen oder sich von dem Metallbehälter beim Inkontaktversetzen des Metallbehälters mit dem geschmolzenen Metall zu lösen.

8. Verfahren nach Anspruch 7, **dadurch gekennzeichnet, dass** der Schritt i) durch Einführen oder Einsetzen von mindestens einem Metallbehälter nach Anspruch 7 in ein Flüssigmetallbad durchgeführt wird, wobei das Bad eine Temperatur hat, die ausreicht, damit das Verschlusselement des Behälters schmilzt, sich auflöst oder sich löst, und um den Metallbehälter zum Schmelzen zu bringen.

9. Verfahren nach Anspruch 8, **dadurch gekennzeichnet, dass** die ausreichende Temperatur von Schritt i) von 550 bis 1200 °C reicht.

10. Verfahren nach einem der Ansprüche 7 bis 9, **dadurch gekennzeichnet, dass** das Verschlusselement ein oder mehrere Papier-Nanometerfilter ist.

11. Verfahren nach einem der Ansprüche 6 bis 10, **dadurch gekennzeichnet, dass** der Schritt iii) durch Gießen des Gemischs des vorangehenden Schritts ii) durchgeführt wird, um das Verbundstoffmaterial zu bilden.

12. Verfahren nach einem der Ansprüche 5 bis 11, **dadurch gekennzeichnet, dass** es ferner einen Herstellungsschritt i₀) der durch Zinnoxid funktionalisierte Kohlenstoffnanoröhrchen umfasst, umfassend die folgenden Unterschritte:
- eventuell einen Kohlenstoffnanoröhrchen-Unterfunktionalisierungsschritt i₀₁) durch geeignete chemische Gruppen, die Andockstellen zwischen den Kohlenstoffnanoröhrchen und dem Zinnoxid darstellen können,
- einen Unterschritt i₀₂) des Inkontaktversetzens der kommerziellen funktionalisierten oder so wie im vorangehenden Unterschritt, sofern vorhanden, hergestellten Kohlenstoffnanoröhrchen mit einem Zinnvorläufer, und
- einen Heiz-Unterschritt i₀₃).

13. Verfahren nach Anspruch 12, **dadurch gekennzeichnet, dass** der Unterschritt i₀₁) durch Säurebehandlung der Kohlenstoffnanoröhrchen mit Schwefelsäure durchgeführt wird.

14. Verfahren nach Anspruch 12 oder 13, **dadurch gekennzeichnet, dass** der Zinnvorläufer Zinnsulfat ist.

15. Stromkabel, **dadurch gekennzeichnet, dass** es mindestens ein Verbundstoffmaterial nach einem der Ansprüche 1 bis 4 oder erhalten nach dem Verfahren nach einem der Ansprüche 5 bis 14 umfasst.

16. Kabel nach Anspruch 15, **dadurch gekennzeichnet, dass** es ein OHL-Kabel ist, umfassend ein längliches Verstärkungselement und eine Anordnung von Verbundstoffadern, die um das längliche Verstärkungselement positioniert sind, wobei jede der Verbundstoffadern ein Verbundstoffmaterial nach einem der Ansprüche 1 bis 4 oder erhalten nach dem Verfahren nach einem der Ansprüche 5 bis 14 ist.

17. Kabel nach Anspruch 15 oder 16, **dadurch gekennzeichnet, dass** es mindestens eine elektrisch isolierende Schicht umfasst, die das Verbundstoffmaterial oder die Vielzahl von Verbundstoffmaterialien umgibt, wobei die elektrisch isolierende Schicht mindestens ein Polymermaterial umfasst.

## Claims

1. Composite material comprising a metal matrix in aluminium, copper, aluminium alloy or copper alloy, and tin oxide functionalized carbon nanotubes dispersed in said metal matrix.

2. The composite material according to claim 1, **characterized in that** it comprises from 0.1 to 10 weight % of tin oxide functionalized carbon nanotubes, relative to the total weight of the composite material.

3. The composite material according to any of the preceding claims, **characterized in that** it has electrical conductivity of at least 50 % IACS.

4. The composite material according to any of the preceding claims, **characterized in that** it has a tensile mechanical strength ranging from 100 to 1000 MPa.

5. Method for preparing a composite material comprising a metal matrix in aluminium, copper, aluminium alloy or copper alloy, and tin oxide functionalized carbon nanotubes dispersed in said metal matrix, **characterized in that** it comprises at least the following steps:
i) contacting tin oxide functionalized carbon nanotubes with a metal selected from among aluminium, copper, an aluminium alloy or copper alloy;
ii) mixing the tin oxide functionalized carbon nanotubes with the metal for homogeneous dispersion thereof in the molten metal; and
iii) forming a solid mass.

6. The method according to claim 5, **characterized in that** said metal is in the molten state.

7. The method according to claim 6, **characterized in that** step i) is conducted by contacting at least one metal container in aluminium, copper, aluminium alloy or copper alloy, comprising tin oxide functionalized carbon nanotubes, with said molten metal, said metal container comprising at least one opening intended to receive the tin oxide functionalized carbon nanotubes, and said opening being closed by a closing element able to melt, to dissolve or to detach itself from said metal container at the time of contacting of said metal container with the molten metal.

8. The method according to claim 7, **characterized in that** step i) is conducted by introducing or injecting at least one metal container such as defined in claim 7 into a liquid metal bath, said bath being at sufficient temperature to melt or dissolve or detach the closing element from said container, and to melt said metal container.

9. The method according to claim 8, **characterized in that** the sufficient temperature at step i) ranges from 550 to 1200 °C.

10. The method according to any of claims 7 to 9, **characterized in that** the closing element is one or more nanometric paper filters.

11. The method according to any of claims 6 to 10, **characterized in that** step iii) is conducted by casting the mixture of the preceding step ii) to form said composite material.

12. The method according to any of claims 5 to 11, **characterized in that** it further comprises a step i₀) to prepare tin oxide functionalized carbon nanotubes, comprising the following sub-steps:
- optionally a sub-step i₀₁) to functionalize carbon nanotubes with suitable chemical groups able to represent cling sites between the carbon nanotubes and tin oxide;
- a sub-step i₀₂) to contact commercial functionalized carbon nanotubes or such as prepared at the preceding sub-step if any, with a tin precursor; and
- a heating sub-step i₀₃).

13. The method according to claim 12, **characterized in that** the sub-step i₀₁) is conducted via acid treatment of the carbon nanotubes with sulfuric acid.

14. The method according to claim 12 or 13, **characterized in that** the tin precursor is tin sulfate.

15. Electrical cable, **characterized in that** it comprises at least one composite material such as defined in any of claims 1 to 4, or obtained according to the method such as defined in any of claims 5 to14.

16. The cable according to claim 15, **characterized in that** it is an OHL cable comprising an elongate reinforcing element and an assembly of composite strands positioned around the elongate reinforcing element, each of the composite strands being a composite material such as defined in any of claims 1 to 4 or obtained according to the method such as defined in any of claims 5 to 14.

17. The cable according to claim 15 or 16, **characterized in that** it comprises at least one electrically insulating layer surrounding said composite material or plurality of composite materials, said electrically insulating layer comprising at least one polymer material.
